# EUROPEAN PATENT APPLICATION

(11) **EP 4 295 977 A1**
(43) Date of publication of application: **27.12.2023**
(21) Application number: 22382598.5
(22) Date of filing: 24.06.2022
(51) Int. Cl.: B22F 12/52, B29C 64/321, B29C 64/329, B33Y 40/00, B22F 12/50

(54) **POWDER FEEDING SYSTEMS FOR LASER METAL DEPOSITION AND METHODS FOR REFILLING A POWDER FEEDER**

(71) Applicant: Talens Systems, S.L.U., 20870 Elgoibar - Gipuzkoa (ES)
(72) Inventor: Alvarez, Piera, GIPUZKOA (ES); Pinheiro Aleixo, André Felipe, GIPUZKOA (ES); Barcena, Alejandro, GIPUZKOA (ES)
(74) Representative: Balder IP Law, S.L.

(57) **Abstract**

Examples refer to powder feeding systems, comprising a powder feeder connectable to a laser metal deposition equipment, the powder feeder comprising a feeding hopper to store powder, a first powder outlet through which powder is feed to the laser metal deposition equipment and a first powder inlet, a refilling hopper to store additional powder that comprises a second powder outlet connected to the first powder inlet through which the additional powder is provided to the feeding hopper and pressure generation means to generate an operating pressure level inside the feeding hopper. The system also comprises a controller that, during normal operation of the powder feeder and upon reception of a refilling signal, cause the generation of a pressure level inside the refilling hopper substantially equal to the operating pressure level and cause the passage of additional powder from the refilling hopper to the feeding hopper.

## Description

### FIELD OF INVENTION

The present invention generally refers to additive manufacturing techniques, such as additive layering manufacturing processes that use metal or ceramic powders to form a build or coat surfaces of pieces. More particularly, the present invention refers to powder feeding systems for laser metal deposition manufacturing processes, and methods for refilling a powder feeder of said powder feeding systems.

### BACKGROUND OF THE INVENTION

LMD, also known as laser cladding, is a Direct-Energy Deposition (DED) process in which a laser source is used to generate a concentrated beam that is focused upon the surface of a substrate (workpiece) and generates a melt pool on the substrate. Material in the form of powder or wires is injected out through one or more delivery nozzles and into the focused laser beam. For the case in which the added material is powder, e.g., metal or ceramic powder, the blown powder meets the laser beam and is absorbed and integrated into the melt pool, being deposited on the surface of the substrate. A XYZ positioning mechanism generally moves the substrate relative to the laser to create the piece layer by layer. This technique allows the additive manufacturing layer by layer of complex geometry parts, of medium and large size, and with a high deposition rate (up to 10 Kg/h or even higher). LMD generally uses data computer-aideddesign (CAD) software or 3D object scanners to direct hardware to deposit the material.

The powder particles injected into the laser beam are drawn from a feeding system through cylindrical inlets to the feeding nozzles. Existing powder feeders use mechanical structures to deliver metered powder flow. Typically, the powder is drawn or pushed out of a powder reservoir via the action of a rotating wheel driven by a motor. Such feeding systems must maintain a constant pressure (e.g., 1.5 bar or higher) inside their reservoirs or hoppers to avoid creating fluctuations in powder flow which may provoke feeding powder at a non-consistent rate. These fluctuations can also create quality control issues that otherwise require consistent powder flow. Ensuring that the powder is efficiently and consistently fed to the gas-powder stream at the powder delivery nozzles is critical to the laser cladding to guarantee obtaining high quality pieces.

However, the reservoirs or hoppers of the existing powder feeders have a limited capacity to store powder (hopper volumes generally ranges from 1.1 to 5 liters) so, since they must maintain a constant pressure within very specific margins, every time the hoppers are empty and they have to refilled, the laser cladding is to be stopped. This refilling operation may take place every few hours depending on the volume of the hopper and the deposition rate. This makes the manufacturing process inefficient and may create discontinuities in the resulting piece. Some solutions have tried to overcome this problem by including additional powder feeders with their corresponding hoppers which are connected to the respective laser cladding equipment in parallel and by interposition of switches, valves or similar devices to control which powder feeder is feeding the deposition nozzle. In this way, the system has a main powder feeder and backup powder feeders which will be operated as the rest of the powder feeders have emptied their hoppers. This solution is inefficient, expensive, unsuitable for situations where there is not enough space available to install a plurality of powder feeders and introduces a great variability in the obtained deposited surfaces since the powder feeders might not deposit exactly the same amount of powder (the deposition rate is of grams per minute) onto the substrate.

Thus, there is still a need in the art for powder feeding systems, especially useful for high-rate manufacturing processes, that are able to provide a constant and continuous powder supply at a consistent rate and in an amount that is enough to manufacture pieces of great size.

### DESCRIPTION OF THE INVENTION

A first object of the invention is a powder feeding system that comprises a powder feeder connectable to a LMD equipment, the powder feeder comprising a feeding hopper to store powder, a first powder outlet through which the powder is to be fed to the LMD equipment and a first powder inlet. As used herein, the LMD equipment may refer to any device or system, such as laser cladding machines, deposition laser heads or nozzles, etc., capable of creating a molten pool at the workpiece surface, to which is simultaneously added the powder molten by the laser. The powder feeder may preferably be a positive displacement feeder which uses a rotating disk that collects powder in small holes or grooves. Alternatively, the powder feeder may be a screw type powder feeder, a flowmotion powder feeder including a defined vibration movement drive to dose the powder material or any other known type of powder feeder. At some point, powder is blown into the powder feed line where a gas like Argon or Nitrogen carries the powder through the powder feed hose to the required point of exit at the deposition nozzles.

The powder feeding system also comprises pressure generation means to generate an operating pressure level inside the feeding hopper. The operating pressure level inside the feeding hopper may generally range from 1,5 bar up to 6 bar, although other pressure levels may be used to ensure proper pressure differential between the hopper content and the powder carrier gas stream used to move the fluidized powder out of the hopper and towards the deposition nozzle. While in some embodiments the pressure generation means may be one single pressure source, such as a piston screw pump, a differential pressure generator, the pressurized bottle (gas cylinder) in which said gas is stored, etc., that generates the pressure level in both hoppers, in some other embodiments, different pressure sources could be used to generate both pressure levels. Preferably, the pressure source will be a pressurized gas source.

The powder feeding system further comprises at least one refilling hopper being configured to store additional powder and comprising a second powder outlet fluidly connected to the first powder inlet through which the additional powder is provided to the feeding hopper. The refilling hopper may have a wide range of shapes and volumes depending on the system in which it is to be installed and the requirements of the particular additive manufacturing process. Preferably, the refilling hopper may have a volume selected to store up to 400 kg of powder or even more. This additional powder will be the same powder stored in the feeding hopper.

The powder feeding system also comprises a controller configured to, during normal operation of the powder feeder and upon reception of a first refilling signal, cause the pressure generation means to generate a pressure level inside the refilling hopper that is substantially equal to the operating pressure level in the feeding hopper and to cause the passage of at least part of the additional powder from the refilling hopper to the feeding hopper. As used herein the "normal operation of the powder feeder" refers to the regular operation of the feeder in which the required powder dose is being provided to the LMD equipment. In this way, the refilling hopper refills the feeding hopper during its normal operation without having to stop the LMD process at any time. By equalizing the pressures in both hoppers prior to transferring the powder from the refilling hopper to the feeding hopper, the pressure at the feeding hoper is not affected during powder passage so fluctuations in the powder flow rate at the outlet of the powder feeder are avoided. This maintains the powder flow at a constant and consistent rate, ensures a constant and continuous deposition of the powder onto the respective substrate and guarantees obtaining high quality pieces. Additionally, by carrying out the refilling of the hopper of the powder feeder during its normal feeding operation and thus, without having to stop the powder feeding, the additive manufacturing process, in particular the laser metal deposition process, which is being fed by said powder feeder does not have to be interrupted at any time. This improves the overall efficiency of the cited manufacturing process.

Once the predefined amount of powder has passed from the refilling hopper to the feeding hopper, the refilling hopper can be depressurized.

As used herein, the controller may be a CNC controller, a PLC or similar, or any other device including the required hardware and software to perform the functionalities herein disclosed.

In some embodiments, the powder feeding system comprises a first flow control device located between the feeding hopper and the refilling hopper to control the passage of the additional powder. This flow control device may be integrated into a conduct, pipe or hose communicating the first powder inlet of the feeding hopper with the second powder outlet of the refilling hopper. The first flow control device is configured to allow or prevent the passage of powder from the refilling hopper towards the feeding hopper. By way of example, this first flow control device may be a solenoid valve or a pneumatic valve, and more preferably a membrane solenoid valve or a membrane pneumatic valve. In some other embodiments, the valve may be a pinch valve which in its normal position is closed and that opens when it is pressurized or vice versa.

In some embodiments, the powder feeding system comprises a first flowmeter located between the feeding hopper and the refilling hopper, preferably downstream the first flow control device, to monitor the amount of additional powder passing to the feeding hopper. This allows having a better control on the amount of powder passing from the refilling hopper to the feeding hopper and thus, on the remaining amount of powder inside both hoppers.

In some embodiments, the powder feeding system comprises a second flowmeter located at the outlet of the powder feeder to monitor the powder flow rate to be provided to the laser metal deposition equipment. This allows having a better control on the amount of powder being provided to the LMD equipment.

In some embodiments, the powder feeder comprises a first level sensor to monitor the powder level inside the feeding hopper. This first level sensor may be located on the cap of the feeding hopper. Alternatively, the powder feeder may comprise load cells to weight the powder inside the feeding hopper from which the amount of remaining powder can be estimated. Using level sensors simplifies monitoring the amount of remaining powder since said measure is independent on the particular physical and chemical features, e.g., density, of the powder filling the hopper. A variety of sensors are available for point level detection of solids including vibrating, rotating paddle, mechanical (diaphragm), microwave (radar), capacitance, optical, pulsed-ultrasonic and ultrasonic level sensors.

In some embodiments, the first refilling signal received at the controller is a signal issued by the first level sensor indicating that the level of powder inside the feeding hopper is under a first predefined threshold. Alternatively, said first refilling signal may be a signal generated by a user to force the refilling of the feeding hopper. The first level sensor may also emit a stop signal indicating that the level of powder inside the feeding hopper has reached a "full" level, so the controller can cause the refilling hopper to stop passing powder to the feeding hopper. For example, the controller may close the first flow control device.

In some embodiments, the refilling hopper comprises a second powder inlet through which powder is provided from an external powder source. This external powder source may be a powder deposit from which powder may be provided by gravity, by blowing the powder (e.g., injecting a gas) or by some other impulsion device such as a peristaltic pump or any other device or system able to impulse the powder from the external source to the refilling hopper. This second powder inlet will be preferably located on the cap of the refilling hopper. The refilling hopper may further comprise another powder inlet for introducing powder manually.

In some embodiments, the powder feeding system comprises a second flow control device located upstream the second powder inlet to control the powder passage from the external powder source. This flow control device may be integrated into a conduct, pipe or hose communicating the second powder inlet of the refilling hopper with the external powder source and may open and close to allow or prevent powder to pass through it. By way of example, this second flow control device may be a solenoid valve or a pneumatic valve, and more preferably a membrane solenoid valve or a membrane pneumatic valve. In some other embodiments, the valve may be a pinch valve which is its normal position is closed and that opens when it is pressurized or vice versa.

In some embodiments, the refilling hopper comprises a second level sensor, e.g., vibrating, rotating paddle, mechanical (diaphragm), microwave (radar), capacitance, optical, pulsed-ultrasonic and ultrasonic level sensors, to monitor the powder level inside the refilling hopper. This second level sensor may be located on the cap of the refilling hopper. Alternatively, the refilling hopper may comprise load cells to weight the powder inside the refilling hopper from which the amount of remaining powder can be estimated.

In some embodiments, the controller is configured to, in response to receiving a second refilling signal, cause powder to be provided to the refilling hopper from the external powder source via the second powder inlet. That is to say, the controller may cause the injection of gas to blown the powder from the external powder source or may activate the peristaltic pump to fed the powder and may also open the valve located at the entrance of the refilling hopper.

In some embodiments, the second refilling signal is a signal received from the second level sensor indicating that the level of powder inside the refilling hopper is under a second predefined threshold or a signal received from a user. In any of these cases, the controller may activate the corresponding impulsion means to feed powder from the external powder source to the refilling hopper or the powder may be manually added to the refilling hopper. Besides, the controller may cause the second flow control device to open allowing the passage of said powder. The second level sensor may also emit a stop signal indicating that the level of powder inside the refilling hopper has reached a "full" level, so the controller can cause the external powder source to stop feeding powder to the refilling hopper. For example, the controller may close the second flow control device or to deactivate the injection of gas or the peristaltic pump.

In some embodiments, the powder hopper and the refilling hopper comprise a corresponding first pressure sensor and second pressure sensor to monitor the pressure level inside the corresponding feeding hopper and refilling hopper, respectively. These pressure sensors are used to monitor the pressure levels inside the hoppers at any time and specially during the refilling operation.

In some embodiments, the feeding hopper and the refilling hopper comprise a first and a second gas inlet, respectively, fluidly connected to pressure generation means.

In some embodiments, the feeding hopper and the refilling hopper are configured to store metal powder (stainless steel, silver, copper nickel, titanium, cobalt, metal oxides, etc.), ceramic powder (carbides, nitrides, oxide ceramics, etc.) or a combination of both. Metal powder can be made of a single metal component, a combination of metal components, alloys and any combination thereof. Ceramic powder can be made of a single ceramic component or a combination of ceramic components. Due to the toxicity of these powders, the powder feeding system herein disclosed has been designed to be preferably airtight.

In some embodiments, at least one of the feeding hopper and the refilling hopper comprises an electrically actuated stirrer to move the powder. Preferably, both hoppers comprise an electrically actuated stirrer. The stirrers may be driven by an electric motor located on the respective caps of the hoppers and by interposition of corresponding rotary axial axes. The stirrer may be any well-known stirrer capable of moving powder in proximity to the powder outlet so blockages and powder segregation are minimized and the continuous feeding of powder is ensured. Preferably, the electrically actuated stirrer is a screw conveyor configured to transport powder from an area located in proximity to the respective powder outlets of the feeding hopper and refilling hopper, respectively, upwardly. By doing so, powder segregation is reduced in the area closer to the respective powder outlets.

In some embodiments, the powder feeding system comprises heating mats or heater jackets at least partially covering an outer surface of at least one of the feeding hopper and the refilling hopper. By heating the powder, the humidity inside the hoppers is minimized reducing powder segregation.

In some embodiments, at least one vibration motor is coupled to an outer surface of the refilling hopper. This vibration motor can be operated when a blockage is detected (the flowmeter may not detect the passage of powder when the first flow control device is opened allowing said passage) and when powder is to be replaced and the refilling hopper need to be cleaned. Alternatively or in combination with this vibration motor, the refilling hopper may further comprise additional gas inlets through which a pressurized gas, preferably air, is injected for cleaning said hopper. Said additional gas inlets may be located in the cap of the refilling hopper or in its side wall and may be connected to an air compressor.

In some embodiments, the refilling hopper and the feeding hopper may comprise respective pressure relief valves to control or limit the maximum pressure level inside both hoppers.

A second object of the invention is a method for refilling a feeding hopper of a powder feeding system. The method comprises providing a powder feeding system as previously described wherein the feeding hopper has been pressurized at an operating pressure level to provide powder to an LMD equipment. As previously mentioned, the LMD equipment may refer to any equipment, such as laser cladding machines, deposition heads or nozzles, etc., capable of depositing metal and/or ceramic powder onto a substrate by melting it.

Then, during normal operating of the powder feeder of the powder feeding system, the method further comprises:
receiving, at the controller, a first refilling signal. This refilling signal is indicative that the feeding hopper is to be refilled and may be issued by a user when, for example, he visually detects that the powder level inside the feeding hopper is low or when the first level sensor or the load cells of the feeding hopper detect that the powder level inside the hopper is low, e.g., is under a first predefined threshold;
pressurizing, by the pressure generation means, the refilling hopper until a pressure level inside the refilling hopper is substantially equal to the operating pressure level in the feeding hopper. That is to say, the controller instructs the pressure generation means to generate a pressure inside the refilling hopper that is equal to the operating pressure level in the feeding hopper;
causing the passage of at least part of the additional powder stored in the refilling hopper to the feeding hopper. This might be caused by opening the flow control device located between the feeding hopper and the refilling hopper and with the help of the gravity, of some impulsion mechanism, of a small pressure difference between both hoppers or a combination thereof. Once the predefined amount of powder has passed from the refilling hopper to the feeding hopper, the refilling hopper can be depressurized.

In some embodiments, the method comprises pressurizing the refilling hopper at a pressure level that is equal or up to 1 bar, preferably up to 0.5 bar, and more preferably of 0.2 bar, higher than the operating pressure level in the feeding hopper.

In some embodiments, the method comprises receiving, at the controller, a second refilling signal. This second refilling signal, that indicates that the powder level inside the refilling hopper is low. Then, the controller causes the passage of powder from an external powder source to the refilling hopper. The controller may cause the injection of gas to blown the powder from the external powder source or may activate the peristaltic pump to fed the powder. Besides, the controller may also instruct to open the second flow control device located between the refilling hopper and the external powder source to allow the entrance of said powder.

In some embodiments, the second refilling signal is a signal received from the second level sensor indicating that the level of powder inside the refilling hopper is under a second predefined threshold or a signal received from a user. In any of these cases, the controller may activate the corresponding impulsion means to feed powder from the external powder source to the refilling source or the powder may be manually added to the refilling hopper. The second level sensor may also emit a stop signal indicating that the level of powder inside the refilling hopper has reached a "full" level, so the controller can cause the external powder source to stop feeding powder to the refilling hopper. For example, the controller may close the second flow control device or to deactivate the injection of gas or the peristaltic pump.

The powder feeding system and method for feeding powder herein described present several advantages and/or differences compared with previous devices and techniques. In particular, it is provided a system and method that is able to provide a constant, continuous, consistent and steady powder flow at the low flow rates required by the additive manufacturing processes such as the LMD processes. It avoids creating fluctuations in powder flow which may provoke quality control issues. Besides, the plurality of powder feeders used in the state of the art, which are quite expensive, are replaced by a refilling hopper, which is significantly cheaper, that can refill the powder feeder as many times as required and without introducing fluctuations in the powder flow being provided to the additive manufacturing equipment. Finally, the solution herein disclosed avoids having to stop the manufacturing process to refill the feeding hopper by refilling said hopper during the normal operation of the powder feeder and without affecting its normal functioning. This solution being especially useful for high-rate additive manufacturing processes.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out.

The drawings comprise the following figures:
Figure 1 shows a perspective front view of a powder feeding system, according to a particular embodiment of the invention.
Figure 2A shows a perspective front view of the powder feeding system of Figure 1 including a first embodiment of a pressure generation subsystem.
Figure 2B shows a perspective front view of the powder feeding system of Figure 1 including a second embodiment of a pressure generation subsystem.
Figure 3 shows a perspective detailed view of the cap of the feeding hopper of Figures 1 and 2A.
Figure 4 shows a perspective view of the refilling hopper, according to a particular embodiment of the invention.
Figure 5 shows a plan view of the cap of the refilling hopper of Figure 4.
Figure 6 shows a cut plan view of the refilling hopper of Figure 4 along its longitudinal axis.
Figure 7 shows a flow diagram of a method for refilling a powder hopper of a powder feeding system, according to a particular err odiment of the invention.

### DETAILED DESCRIPTION OF THE INVENTION

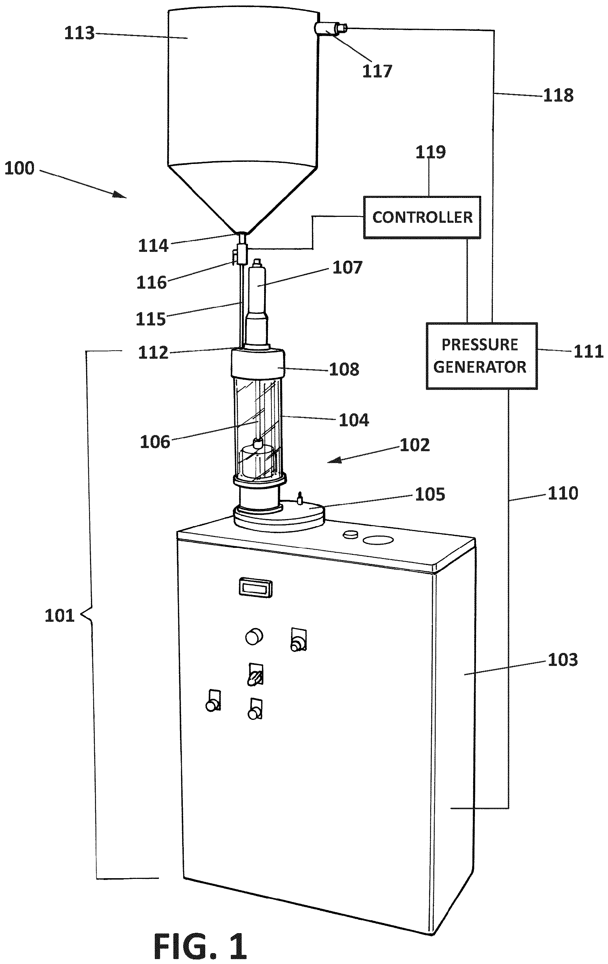

Figure 1 shows a perspective front view of a powder feeding system 100 according to a particular embodiment of the invention. It should be understood that the system 100 of Figure 1 may include additional components and that some of the components described herein may be removed and/or modified without departing from a scope of the described system 100. Additionally, implementation of the system 100 is not limited to such embodiment.

The powder feeding system 100 comprises a powder feeder 101, in particular a disc-type powder feeder, which in turn comprises a feeding hopper 102 to store powder and a cabinet 103 that carries the feeding hopper 102 and stores the electric, electronic and mechanical components that manage the powder feeding operation. The feeding hopper 102 is formed by a container 104 that stores the powder and the feed disc 105 with a ring groove (not shown in this figure). The rotation of the feed disc 105 enables the powder filled groove to the opposite side of the container 104 when the carrier gas, Argon o Nitrogen, uses a suction unit to pick up the powder by sucking it out of the groove. Preferably an anti-static hose could be used to feed the powder into the laser cladding nozzle (not shown in this figure). The feeding hopper 102 further comprises a stirrer 106 with rotation control actuated by a rotary motor 107 located on its upper cap 108. The stirrer 106 rotates inside the container 104 at a defined distance from the spreader unit (not shown in this figure) and helps to ensure the continuous feeding of powders that do not flow well or tend to trickle poorly. Different types of stirrers, e.g., standard or with pins or small plates, could be used.

The pressurized gas that feeds the feeding hopper 102 is provided by a pressure generator 111 such as a piston screw pump, a differential pressure generator connected to gas source, e.g., argon or nitrogen, or the pressurized bottle in which said gas is stored with interposition of a pressure gauge to adjust the delivery pressure. This pressure generator 111 is directly connected to the cabinet 103 so the pressurized gas reaches the feeding hopper 102 though said cabinet 103 and via a gas inlet (not shown) located in the lower portion of the feeding hopper 102. This pressure generator 111 generates a pressure level of, for example, 6 bars of pressure that may be preferably lowered by a pressure regulator to 1,5 bars before entering the feeding hopper 102 (other pressure levels could be generated by the pressure generator 111 and provided to the feeding hopper 102 depending on the particular application and the reinforcement used in the container 104), which is the operating pressure level for the powder feeder 101 for its normal operation. The gas injected to generate said pressure can only exit the feeding hopper 102 from the suction unit and via the powder outlet through which the powder is to be fed to the laser cladding nozzle. The feeding hopper 102 also comprises a powder inlet 112 through which powder is received from the refilling hopper 113.

The refilling hopper 113 also comprises a rotary stirrer (not shown in this figure) that may have the same architecture than the stirrer 106 of the feeding hopper 102 or may be different. Said stirrer may also be actuated by a rotary motor (not shown in this figure) located on the cap (not shown) of the refilling hopper 113. The powder outlet 114 of the refilling hopper 113 is connected to the powder inlet 112 of the feeding hopper 102 by an anti-static hose 115 and a flow control device, in particular, a pinch valve 116 that uses pressurized air to open or close the valve. The refilling hopper 113 further comprises a gas inlet 117 connected to a hose 118 which is feed by the same pressure generator 111. Alternatively, the refilling hopper 113 and the feeding hopper 102 may be connected to different pressure generators, respectively.

Preferably, the refilling hopper 113 may have a volume selected to store up to 400 kg of powder or even more. This powder stored in the refilling hopper 113 is the same powder stored in the container 104 of the feeding hopper 102 and it may be a metal powder (stainless steel, silver, copper nickel, titanium, cobalt, metal oxides, etc.), a ceramic powder (carbides, nitrides, oxide ceramics, etc.) or a combination of both. Said metal powder can be made of a single metal component, a combination of metal components, alloys and any combination thereof. Ceramic powder can be made of a single ceramic component or a combination of ceramic components.

During normal operation of the powder feeder, when the controller 119 receives a signal indicating that the amount of powder in the feeding hopper 102 is low, it instructs the pressure generator 111 to also provide 1,5 bars of pressure inside the refilling hopper 113 to equalize the pressure levels in both hoppers 102,113. Then, the controller 119 will also deactivate (the pinch valve 116 is being pressurized to keep it close) the compressor (not shown) connected to the pinch valve 116 so it opens and at least part of the powder stored in the refilling hopper 113 can pass to the feeding hopper 102 by the action of gravity. Once the feeding hopper 102 has been refilled, the controller 119 activates the compressor to close the pinch valve 116 and stops the pressure generator 111 to provide the pressure inside the refilling hopper 113. All the components and connections of the powder feeding system 100 through which powder passes are airtight to avoid leakages due to the high toxicity of said powder.

Thus, the container 104 of the feeding hopper 102 is refilled by the refilling hopper 113 in a continuous way and without introducing pressure changes in the feeding hopper 102 that may cause fluctuations in the powder flow rate at the outlet of the powder feeder 101. This avoids having to interrupt the powder feeding process being performed by the powder feeder 101 to refill it and thus, avoids having to interrupt the additive manufacturing process carried out by the LMD equipment that is being fed by said powder feeder 101.

While figure 1 shows a particular shape and disposition of the elements forming the powder feeding system 100, other designs and architectures could be used. Besides, although in figure 1 the controller 119 is shown as an independent element located outside the cabinet 103, it may be the same controller used to manage the rest of elements of the powder feeding system 100 and it may be housed inside said cabinet 103.

Similarly, although figure 1 shows a disc-type powder feeder 101 and a pinch valve 116, other powder feeders based on different feeding technologies and other electrovalves or pneumatic valves could be used. Additionally, although in figure 1 only one refilling hopper 113 is connected to a single feeding hopper 102, in some other embodiments, more than one refilling hopper 113 could be connected to one or more feeding hoppers 102 of the same powder feeder 101.

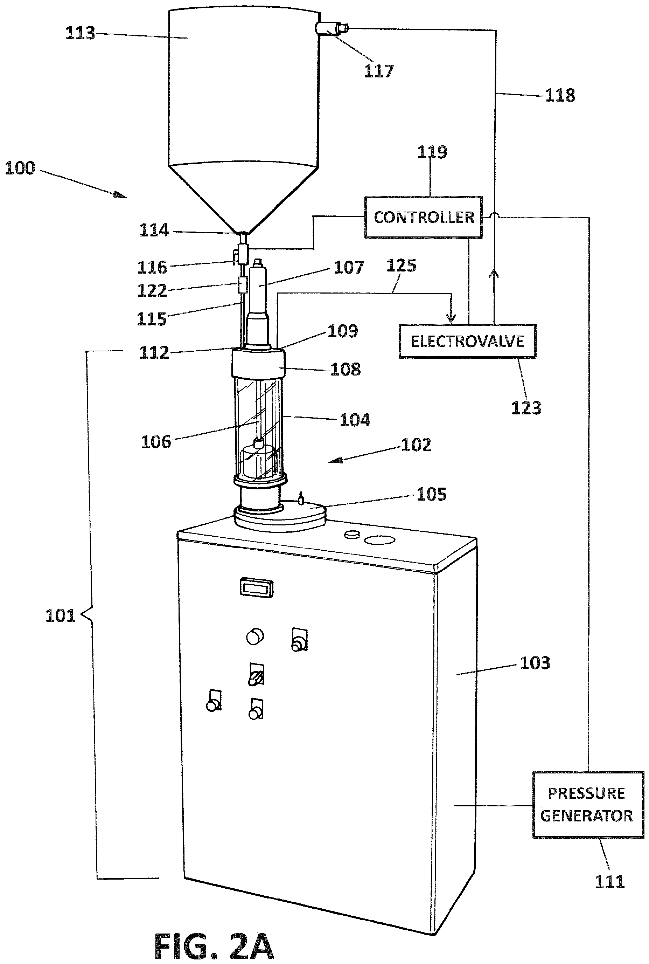

Figure 2A shows a perspective front view of the powder feeding system 100 of Figure 1 including a first embodiment of a pressure generation subsystem.

This embodiment of the pressure generation subsystem comprises the pressure generator 111 which is directly connected to the cabinet 103 so the pressurized gas provided by the pressure generator 111 is fed at 6 bars of pressure and is then lowered to 1,5 bars before entering the feeding hopper 102 by a pressure regulator (not shown) located preferably inside the cabinet 103. There is a connection inside the cabinet 103 between said pressure regulator and the feeding hopper 102 for feeding the pressurized gas. The pressure generator 111 is further managed by the controller 119.

In such embodiment, the feeding hopper 102 comprises a gas outlet 109 that fluidly connects the feeding hopper 102 with the refilling hopper 113 by interposition of valve 123, e.g., an electrovalve or solenoid valve, designed for either shutting off or allowing a fluid, in particular a gas such as Nitrogen or Argon, to flow. So, when the controller 119 receives a signal indicating that the amount of powder in the feeding hopper 102 is low, it instructs the valve 123 to allow the passage the pressurized gas from the pressure generator 111 towards the refilling hopper 113 via the feeding hopper 102 until the pressure inside the refilling hopper 113 is equalized with the pressure level inside the feeding hopper 102. Then, the controller 119 will also deactivate (the pinch valve 116 is being pressurized to keep it close) the compressor (not shown) connected to the pinch valve 116 so it opens and at least part of the powder stored in the refilling hopper 113 can pass to the feeding hopper 102 by the action of gravity. In such embodiment, there is also a flowmeter 122 at the outlet of the pinch valve 116 to control the amount of powder passing to the feeding hopper 102. Once the feeding hopper 102 has been refilled, the controller 119 activates the compressor to close the pinch valve 116 and instructs the valve 123 to shut off.

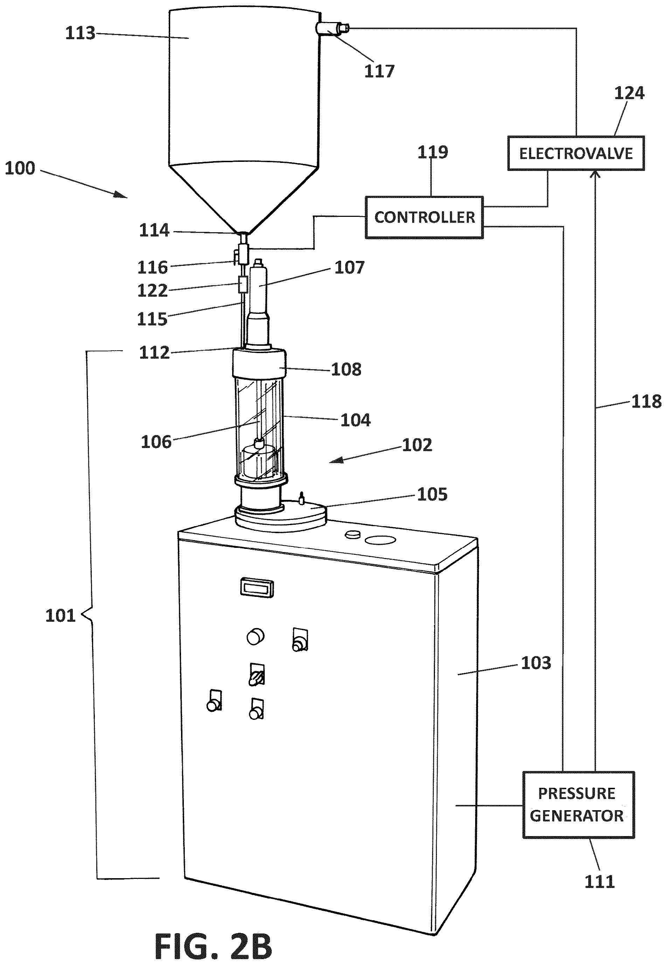

Figure 2B shows a perspective front view of the powder feeding system 100 of Figure 1 including a second embodiment of a pressure generation subsystem.

In this second embodiment of the pressure generation subsystem the pressure generator 111 is directly connected to the cabinet 103 through which the pressurized gas reaches the feeding hopper 102. The pressure generator 111 is also directly connected to the refilling hopper 113 by interposition of another valve 124 (electrovalve or solenoid valve). The gas provided by the pressure generator 111 may be at a pressure of 6 bars and it may be lowered to 1,5 bars before entering the feeding hopper 102 by a pressure regulator (not shown) located inside the cabinet 103 or integrated into the pressure generator 111. The gas provided to the refilling hopper 113 may be also provided by the pressure generator 111 at a pressure of 6 bars and it may be lowered to 1,5 bars by a pressure regulator (not shown) integrated into the pressure generator 111. The pressure regulator for the gas that is provided to the refilling hopper 113 may be configured to provide said gas at a pressure slightly higher than the pressure at which it is being provided to the feeding hopper 102. For example, the gas being provided to the refilling hopper 113 may be at any pressure with the range 1,5-2,5 bars. This pressure difference between both hoppers will help the powder to pass from the refilling hopper 113 to the feeding hopper 102. The pressure generator 111 is being managed by the controller 119 too.

When the controller 119 receives a signal indicating that the amount of powder in the feeding hopper 102 is low, it instructs the valve 124 to allow the passage the gas from the pressure generator 111 towards the refilling hopper 113 until the pressure level inside the refilling hopper 113 is equal or slightly higher than the pressure level inside the feeding hopper 102. Then, the controller 119 will also deactivate (the pinch valve 116 is being pressurized to keep it close) the compressor (not shown) connected to the pinch valve 116 so it opens and at least part of the powder stored in the refilling hopper 113 can pass to the feeding hopper 102 by the action of gravity. In such embodiment, there is also a flowmeter 122 at the outlet of the pinch valve 116 to control the amount of powder passing to the feeding hopper 102. Once the feeding hopper 102 has been refilled, the controller 119 activates the compressor to close the pinch valve 116 and instructs the valve 124 to shut off.

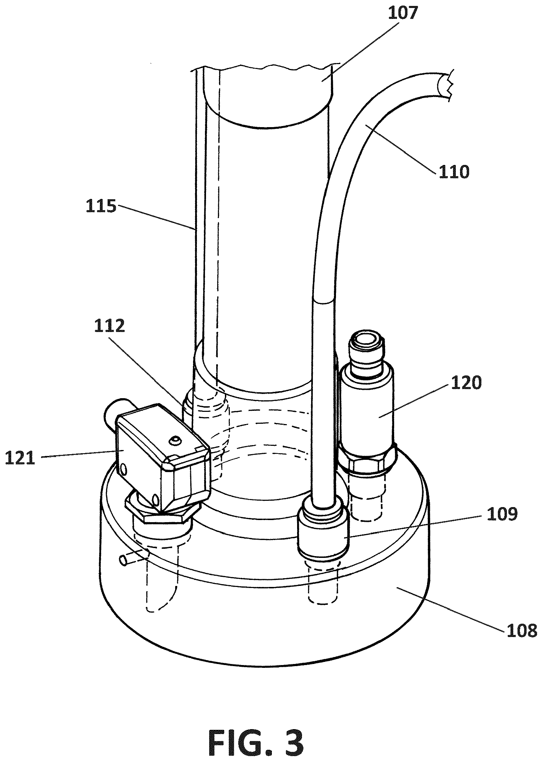

Figure 3 shows a perspective detailed view of the cap 108 of the feeding hopper 102 of Figure 1 and Figure 2A.

The cap 108 comprises the rotary motor 107 for actuating the stirrer 106, the powder inlet 112 connected to the hose 115 through which powder is received from the refilling hopper 113, a pressure sensor 120 to monitor the pressure level inside the container 104 of the feeding hopper 102 and a level sensor 121 to monitor the amount of powder inside the container 104 of the feeding hopper 102. The pressure sensor 120 may be a strain gauge, a piezoelectric sensor, a capacitive sensor, a manometer, or any other sensor capable of monitoring said pressure level inside the container 104. In turn, the level sensor 121 may be an ultrasonic level sensor, a capacitance level sensor, an optical level sensor, or any other sensor capable of monitoring said powder level inside the container 104. The pressure sensor 120 and the level sensor 121 are communicatively connected to the controller 119 to provide both measures in a continuous or periodic manner. The cap further comprises a gas outlet 109 connected to the hose 125 through which the pressurized gas previously injected into the feeding hopper 102 passes towards the refilling hopper 113. In such case, there will be a valve 123 located downstream this gas outlet 109 to either shutting off or allowing the pressurized gas to flow towards the refilling hopper 113.

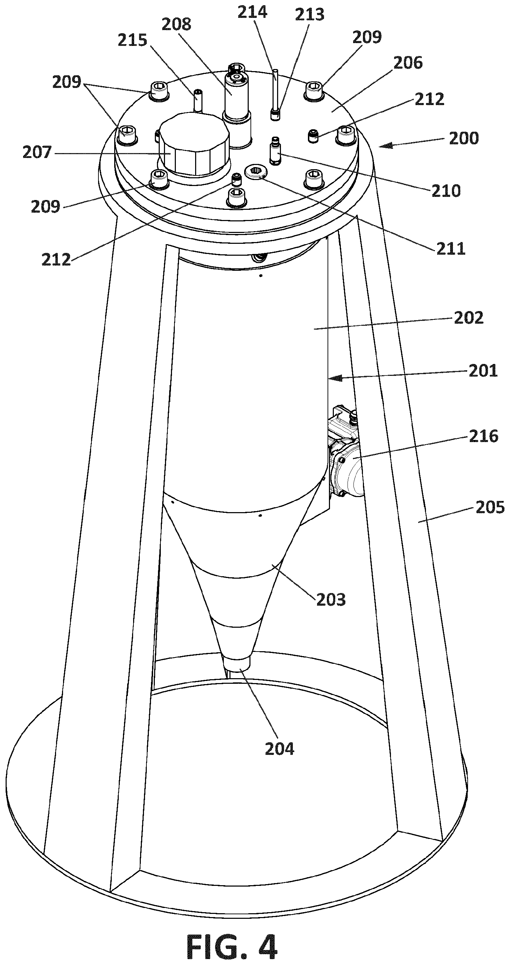

Figure 4 shows a perspective view of a refilling hopper 200, according to a particular embodiment of the invention. It should be understood that the refilling hopper 200 of Figure 4 may include additional components and that some of the components described herein may be removed and/or modified without departing from a scope of the described refilling hopper 200. Additionally, implementation of the refilling hopper 200 is not limited to such embodiment.

The refilling hopper 200 comprises a container 201 to store the powder having an upper cylindrical section 202 and a lower inverted frustoconical section 203 ending in the powder outlet 204 of the hopper 200 through which powder is provided to the feeding hopper via the corresponding hose, duct or pipe, as shown in figures 1 and 2. The refilling hopper 200 further comprises a supporting structure 205 designed to rest on a flat surface, e.g., the floor. This supporting structure is entirely optional and may have different designs. The cap 206 of the refilling hopper 200 comprises a first powder inlet 207 (which is shown with a removable threaded closure) through which powder can be manually feed by a user and a second powder inlet 211 though which powder can be received from an external powder source. This external powder source may be a powder deposit from which powder may be provided by gravity, by blowing the powder (e.g., injecting a gas) or by some other impulsion means such as a peristaltic pump or any other device or system able to impulse the powder from the external source to the refilling hopper 200. The cap 206 also have a rotary motor 208 to actuate the stirrer (not shown), screws 209 to couple the cap 206 to the container 201, a pressure sensor 210, a plurality of gas inlets 212 through which a pressurized gas, generally air, is injected to clean the container 201 when the powder being used is to be replaced by another powder, a gas inlet 213 connected to a hose 214 though which a gas like argon or nitrogen is to be injected to pressurize the inside of the container 201, a pressure relief valve 215 to protect the pressurized container 201 during an overpressure event and a level sensor (not shown in this figure). There is also a vibration motor 216 coupled to the outer surface of the container 201 that can be operated when a blockage is detected (a flowmeter located downstream the powder outlet 204 may not detect the passage of powder) and when powder is to be replaced and the container 201 needs to be cleaned.

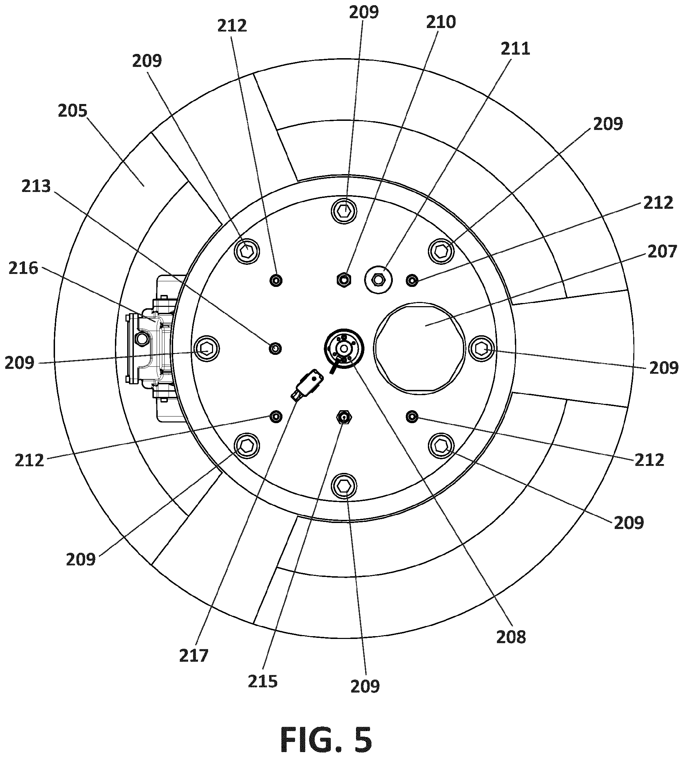

Figure 5 shows a plan view of the cap 206 of the refilling hopper 200 of Figure 4. The cap 206 of the refilling hopper 200 comprises the manual powder inlet 207, the automated powder inlet 211 the rotary motor 208, eight screws 209, the pressure sensor 210, four gas inlets 212 for cleaning purposes, the gas inlet 213 for pressurizing the inside of the container 201, the pressure relief valve 215 and the level sensor 217. The pressure sensor and the level sensor may be the same type of sensors described for the cap of the feeding hopper in figure 3.

While figures 4 and 5 show a particular structure and disposition of the elements of the refilling hopper 113, in some other embodiments, there may be a different number of gas inlets, powder inlets, sensors or screws and they may be located in different locations of the hopper 113. For example, there may be gas inlets 212 for cleaning purposes located in the side wall of the cylindrical section 202 of the container 201.

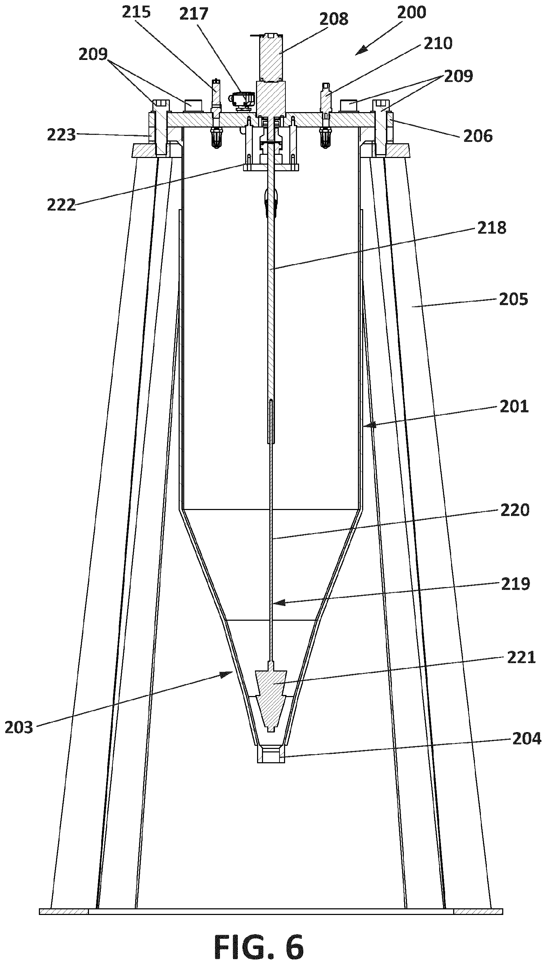

Figure 6 shows sectional view of the refilling hopper 200 of Figure 4 along its longitudinal axis.

It is shown the stirrer 219 inside the container 201 which has a longitudinal section 220 with an agitator 221 in its lower end and that is coupled to a rotating axis 218 by its opposite end. The agitator 221 is formed by two inverted frustoconical portions coupled to each other. The rotating axis 218 is coupled to and actuated by the rotary motor 208. There is a sealing gasket between a circular flange 223 that surrounds the upper edge of the container 201 and the cap 206 to keep the container 201 hermetically sealed. Besides, the cap 206 has a sealing structure 222 with an opening though which the rotating axis 218 passes. There will be another seal between the sealing structure 222 and the rotating axis 218 in order to avoid powder to enter into inner space defined by the sealing structure 222 and the inner surface of the cap 206 and thus, to prevent powder from entering into the rotary motor 208. The stirrer 219 rotates in proximity to the outlet opening 204 of the inverted frustoconical section 203 of the container 201 to minimize powder segregation and to ensure the continuous feeding of powders that do not flow well or tend to trickle poorly.

While figure 6 shows the stirrer 219 with that particular geometry and shape, other stirrers with different geometries and shapes could be used. For example, the stirrer may have pins or small plates at its free end or may be a screw conveyor that transports powder from the area closer to the outlet opening 204 upwardly. Other architectures and designs for the stirrer could be possible provided that they are able to minimize blockages, powder segregation and ensure the continuous feeding of powders. Additionally, the architectures and designs of the stirrer of the refilling hopper 200 may be identical or differ from the architectures and designs of the stirrer of the feeding hopper.

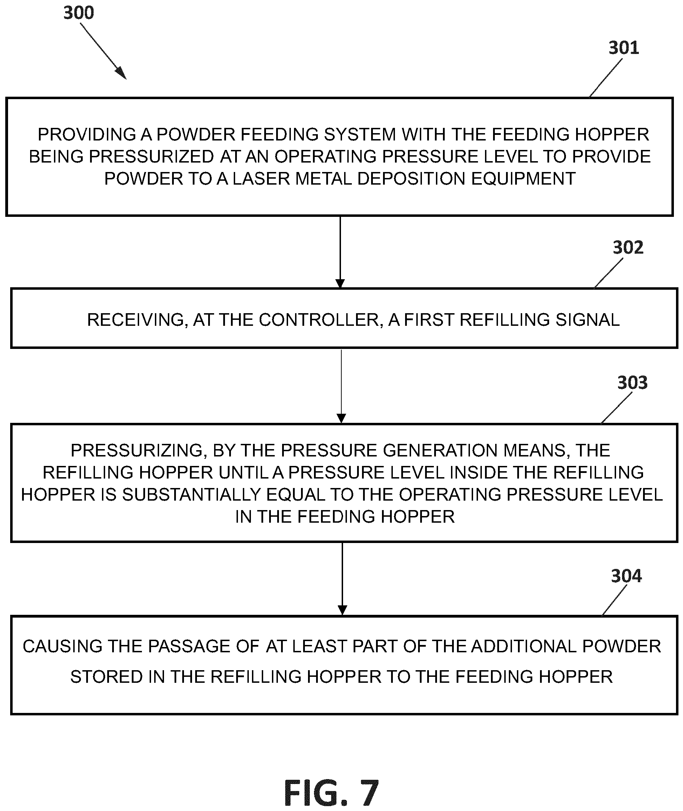

Figure 7 shows a flow diagram of a method 300 for refilling a powder hopper of a powder feeding system, according to a particular embodiment of the invention.

At step 301 of the method 300, a powder feeding system as previously disclosed is provided. The feeding hopper of said powder feeding system is pressurized at the operating pressure level of the powder feeder, e.g., 1.5 bars, so the powder feeder is able to operate normally providing powder to the corresponding laser cladding equipment carrying out the additive manufacturing process.

At step 302 of the method 300, a first refilling signal is received at the controller during normal operating of the powder feeder of the powder feeding system. This first refilling signal is indicative that amount of powder inside the feeding hopper is low so it has to be refilled. Said first refilling signal may be issued by a user when, for example, he visually detects that the powder level inside the feeding hopper is low or when the level sensor or the load cells of the feeding hopper detect that the powder level inside the hopper is low, e.g., is under a first predefined threshold.

At step 303 of the method 300, the controller instructs the pressure generation means to pressurize the refilling hopper so the pressure level inside the refilling hopper is substantially equal to the operating pressure level in the feeding hopper. In particular, the controller may instruct the corresponding flow control means, e.g., electrovalves or pneumatic valves, located between the pressure generation means and the refilling hopper to allow the passage of the pressurized gas generated by the pressure generation means to the refilling hopper until the pressure level in both hoppers is substantially equal. In some embodiments, the pressure inside the refilling hopper may be up to 1 bar higher, preferably up to 0.5 bar higher, and more preferably up to 0.2 bar higher, than the operating pressure level in the feeding hopper. The greater the difference in pressure between both hoppers, the easier it is to pass powder from the refilling hopper to the feeding hopper, but also the more fluctuations in the powder inside the feeding hopper could be generated which could affect the feeding powder flow.

At step 304 of the method 300, the controller causes the passage of at least part of the additional powder stored in the refilling hopper to the feeding hopper. The controller may cause said passage by opening the flow control means, e.g., pinch valve, located in the hose, duct or pipe connecting both hoppers. The gravity, some impulsion device, the difference of pressure between both hoppers or a combination thereof, will help powder to pass from one hopper to the other via said hose, duct or pipe. The level sensor or the load cells of the feeding hopper may also emit a stop signal indicating that the level of powder inside the feeding hopper has reached a "full" level, so the controller can close the flow control device to stop feeding powder to the feeding hopper.

This refilling process is carried during the normal feeding operation of the powder feeder without having to interrupt the additive manufacturing process performed by the corresponding laser cladding equipment. Once the refilling operation has finished, the refilling hopper can be depressurized.

The overpressure relief valve of the refilling hopper will ensure that the overpressures are not generated inside said refilling hopper at step 303 of the method 300.

Additionally, the controller may receive a second refilling signal that is indicative that the powder level inside the refilling hopper is low, in particular, is lower than a second predefined threshold. Said signal may be generated by a level sensor or load cells of the refilling hopper or directly by a user. Then, the controller may cause the passage of powder from an external powder source to the refilling hopper. To do so, the controller may activate the corresponding impulsion means to feed powder from the external powder source to the refilling hopper. The level sensor or the load cells may also emit a stop signal indicating that the level of powder inside the refilling hopper has reached a "full" level, so the controller can cause the external powder source to stop feeding powder to the refilling hopper. Alternatively, a user, in response to said second refilling signal, that may illuminate a pilot light or may generate a sound or any other warning signal, may manually feed the refilling hopper with powder. The stop signal may generate another warning signal or may deactivate the previously activated warning signal so the user is informed that the refilling hopper is already full and he can stop the manual filling of the refilling hopper. During the filling operation of the refilling hopper, the flow control means located between said hoppers will be closed in order to prevent that said filing operation may provoke any turbulence or pressure change inside the feeding hopper.

In this text, the term "comprises" and its derivations (such as "comprising", etc.) should not be understood in an excluding sense, that is, these terms should not be interpreted as excluding the possibility that what is described and defined may include further elements, steps, etc. The term "another," as used herein, is defined as at least a second or more. The term "coupled," as used herein, is defined as connected, whether directly without any intervening elements or indirectly with at least one intervening elements, unless otherwise indicated. Two elements can be coupled mechanically, electrically, or communicatively linked through a communication channel, pathway, network, or system.

The invention is obviously not limited to the specific embodiments described herein, but also encompasses any variations that may be considered by any person skilled in the art (for example, as regards the choice of materials, dimensions, components, configuration, etc.), within the general scope of the invention as defined in the claims.

## Claims

1. A powder feeding system (100), comprising:
a powder feeder (101) connectable to a laser metal deposition equipment, the powder feeder comprising a feeding hopper (102) to store powder, a first powder outlet through which the powder is to be feed to the laser metal deposition equipment and a first powder inlet (112);
at least one refilling hopper (103) being configured to store additional powder and comprising a second powder outlet (114) fluidly connected to the first powder inlet (112) through which the additional powder is provided to the feeding hopper (102);
pressure generation means (111) configured to generate an operating pressure level inside the feeding hopper (102);
a controller (119) configured to, during normal operation of the powder feeder (101) and upon reception of a first refilling signal, cause the pressure generation means (111) to generate a pressure level inside the refilling hopper (113) that is substantially equal to the operating pressure level in the feeding hopper (102) and to cause the passage of at least part of the additional powder from the refilling hopper (113) to the feeding hopper (102).

2. The powder feeding system (100) according to claim 1, comprising a first flow control device (116) located between the feeding hopper (102) and the refilling hopper (113) to control the passage of the additional powder, wherein the first flow control device (116) is, preferably, a solenoid valve or a pneumatic valve, and more preferably, a membrane solenoid valve or a membrane pneumatic valve.

3. The powder feeding system (100) according to any one of the preceding claims, comprising a first flowmeter (122) located between the feeding hopper (102) and the refilling hopper (113), preferably downstream the first flow control device (116), to monitor the amount of additional powder passing to the feeding hopper (102).

4. The powder feeding system (100) according to any one of the preceding claims, comprising a second flowmeter located at the outlet of the powder feeder (102) to monitor a powder flow rate to be provided to the laser metal deposition equipment.

5. The powder feeding system (100) according to any one of the preceding claims, wherein the powder feeder (101) comprises a first level sensor (121) to monitor the powder level inside the feeding hopper (102).

6. The powder feeding system (100) according to any one of the preceding claims, wherein the first refilling signal is a signal received from the first level sensor (121) indicating that the level of powder inside the feeding hopper (102) is under a first predefined threshold or a signal received from a user.

7. The powder feeding system (100) according to any one of the preceding claims, wherein the refilling hopper (113,200) comprises a second powder inlet (211) through which powder is provided from an external powder source.

8. The powder feeding system (100) according to claim 7, comprising a second flow control device located upstream the second powder inlet (211) to control the powder passage from the external powder source, wherein the second flow control device (211) is preferably a solenoid valve or pneumatic valve, and more preferably, a membrane solenoid valve or a membrane pneumatic valve.

9. The powder feeding system (100) according to any one of the preceding claims, wherein the refilling hopper (113, 200) comprises a second level sensor (217) to monitor the powder level inside the refilling hopper (113, 200).

10. The powder feeding system (100) according to any one of the preceding claims, wherein the powder feeder (101) comprises a first pressure sensor (120) to monitor the pressure level inside the feeding hopper (102) and the refilling hopper (113,200) comprises a second pressure sensor (210) to monitor the pressure level inside the refilling hopper (113,200).

11. The powder feeding system (100) according to any one of the preceding claims, wherein the feeding hopper (102) and the refilling hopper (113) comprise a first and a second gas inlet (117), respectively, fluidly connected to the pressure generation means (111).

12. The powder feeding system (100) according to any one of the preceding claims, wherein the feeding hopper (102) and the refilling hopper (113) are configured to store metal powder, ceramic powder or a combination of both.

13. A method (300) for refilling a powder hopper of a powder feeding system, **characterized in that** it comprises providing (301) a powder feeding system according to any one of the preceding claims, the feeding hopper being pressurized at an operating pressure level to provide powder to an additive manufacturing equipment, and
wherein during normal operating of the powder feeder of the powder feeding system, the method further comprises:
receiving (302), at the controller, a first refilling signal;
pressurizing (303), by the pressure generation means, the refilling hopper until a pressure level inside the refilling hopper is substantially equal to the operating pressure level in the feeding hopper; and
causing (304) the passage of at least part of the additional powder stored in the refilling hopper to the feeding hopper.

14. The method (300) according to claim 13, comprising pressurizing the refilling hopper at a pressure level that is equal or up to 1 bar higher, preferably up to 0.5 bar higher, and more preferably up to 0.2 bar higher, than the operating pressure level in the feeding hopper.

15. The method (300) according to claim 13 or 14, comprising:
receiving, at the controller, a second refilling signal, the second refilling signal being preferably a signal received from the second level sensor indicating that the level of powder inside the refilling hopper is under a second predefined threshold or a signal received from a user; and
causing the passage of powder from an external powder source to the refilling hopper.
